# EUROPÄISCHE PATENTSCHRIFT

(11) **EP 4 249 743 B1**
(45) Veröffentlichungstag und Bekanntmachung des Hinweises auf die Patenterteilung: **06.05.2026**
(21) Anmeldenummer: 23160630.2
(22) Anmeldetag: 08.03.2023
(51) Int. Cl.: F02D 41/00, F02D 19/10, F02D 19/02, F02D 19/06, F02D 41/30

(54) **VERFAHREN ZUM BETRIEB EINES GASMOTORS MIT KRAFTSTOFFVERSORGUNGSVORRICHTUNG MIT SELEKTIONSMÖGLICHKEIT ZUR DIREKTEINSPRITZUNG UND/ODER LUFTPFADEINSPEISUNG VON KRAFTSTOFF**
METHOD FOR OPERATING A GAS ENGINE WITH FUEL SUPPLY DEVICE WITH SELECTION POSSIBILITY FOR DIRECT INJECTION AND/OR AIR PATH INJECTION OF FUEL
PROCÉDÉ DE FONCTIONNEMENT D'UN MOTEUR À GAZ AVEC DISPOSITIF D'ALIMENTATION EN CARBURANT PERMETTANT LA SÉLECTION DU DOSAGE DIRECT ET/OU DE L'ALIMENTATION EN CARBURANT PAR VOIE AÉRIENNE

(30) Priorität: 15.03.2022 CH 2772022
(43) Veröffentlichungstag der Anmeldung: 27.09.2023
(73) Patentinhaber: Liebherr Machines Bulle SA, 1630 Bulle (CH)
(72) Erfinder: SEBA, Bouzid, 1632 Riaz (CH); ROHRER, Dimitri, 1615 Bossonnens (CH); VIDINHA SANTOS, Daniel, 2206 Les Geneveys-sur-Coffrane (CH)
(74) Vertreter: Lorenz Seidler Gossel Part. mbB

(56) Entgegenhaltungen:
- EP-A1- 3 741 984
- WO-A1-2006/079172
- WO-A1-2014/094148
- DE-A1- 102022 118 732
- DE-A1- 19 945 544
- DE-B4- 102007 036 958

## Beschreibung

Die Erfindung betrifft ein Verfahren zum Betrieb eines Gasmotors, der über mindestens einen Brennraum bzw. mindestens einen Hauptbrennraum verfügt und eine Kraftstoff-Zuführungsvorrichtung, die mindestens zwei Kraftstoffpfade aufweist mit der jeweils eine Kraftstoffzuführung zu jenem mindestens einen Brennraum vorgesehen ist, wobei über den ersten Kraftstoffpfad eine Direkteinspritzung erfolgt und sich über den zweiten Kraftstoffpfad eine Kraftstoffzuleitung über den Luftansaugtrakt erstreckt.

Vorbekannt sind gasbetriebene Verbrennungskraftmaschinen, bei denen das Einbringen des Brenngases in die Ladeluft mittels eines sogenannten Gasmischers erfolgt und von dort aus über den Luftverteiler in die Brennräume einströmt. Ferner vorbekannt ist die sogenannte Saugrohreinspritzung. Hierbei kann eine Gaseintrittsöffnung in das Saugrohr zur Versorgung mehrerer oder sämtlicher Brennräume dienen. Ebenso bekannt ist eine Saugrohreinspritzung, bei der jeweils ein Brennraum funktionalbezogen über seine eigene Gaseintrittsöffnung verfügt. In diesen genannten Ausführungen setzt die jeweilige zwischen dem Brenngas und der Luft erfolgende Gemischbildung bereits vor dem Einströmen in den Brennraum ein.

Aus der WO 2006/079172 A1 ist eine Kraftstoffeinspritzanlage zur selektiven Direkt- und Saugrohreinspritzung bekannt. Ähnliche Systeme sind aus WO 2014/094148 A1, DE 10 2022 118732 A1 und DE 199 45 544 A1. Die EP 3 741 984 A1 offenbart einen Motor, dessen Hauptbrennraum Kraftstoff per Saugrohreinspritzung zugeführt wird. Eine Vorkammer dient als Zündverstärker.

In Kombinationen mit diesen vorgenannten Konfigurationen sind passive und aktive Vorkammern bekannt. Ein Motor bzw. Gasmotor mit Direkteinspritzung und passiven Vorkammern verfügt pro Zylinder über genau einen Brenngaspfad, wobei die Vorkammer das Brenngas über den entsprechenden Hauptbrennraum erhält. In Bezug auf solche Gasmotoren, die mit aktiven Vorkammern ausgestattet sind, sind solche Ausführungen bekannt, bei denen jede Vorkammer und jeder Hauptrennraum jeweils über ihren eigenen Brenngaspfad verfügen. Auch Gasmotoren mit aktiven Vorkammern, bei denen sich die Brenngaszuführung in einen Hauptbrennraum über die Vorkammer erstreckt, sind mittlerweile vorbekannt.

Die Aufgabe der vorliegenden Erfindung besteht darin, den neu hinzugewonnenen Freiheitsgrad der eingangsgenannten Motoraufbauten vorteilhaft zu nutzen, um hierdurch in Abhängigkeit der Präferenz eine Zunahme der Dynamikfähigkeit und/oder der Wirkungsgradsteigerung sowie einer Geringhaltung der Abgas-Emissionen zu erzielen.

Gelöst wird diese Aufgabe durch ein Verfahren gemäß den Merkmalen des Anspruchs 1 sowie durch einen Gasmotor gemäß Anspruch 21. Vorteilhafte Ausführungen sind Gegenstand der jeweils abhängigen Ansprüche.

Die Idee hinter der Erfindung besteht darin, das vorhandene Optimierungspotential bekannter Gasmotoren, deren Brennräume wenigstens zwei separate Kraftstoff-Zuführungspfade verfügen, besser auszuschöpfen, indem der situationsabhängig vorteilhafte Kraftstoff-Zuführungspfad für die Beladung wenigstens eines Brennraums ausgewählt wird. Die Erfindung sieht demzufolge vor, dass der wenigstens eine Brennraum wahlweise zu 100 % den ersten oder den zweiten Kraftstoff-Zuführungspfad nutzt. Der erfindungsgemässe Gasmotor weist den Vorteil auf, dass er je nach Präferenz oder Anforderung, in einer Betriebsart, unter der reduzierte Abgasemissionen vorliegen, oder alternativ in einer anderen Betriebsart, unter der eine erhöhte Dynamik-Fähigkeit besteht und/oder ein reduzierter spezifischer Kraftstoffverbrauch und zwar insbesondere im unteren bis hin zum mittleren Drehzahlbereich, betrieben werden kann. Diese Vorteilhaftigkeit basiert darauf, dass in einer ersten vorgesehenen Betriebsart die für mindestens einen Brennraum benötigte Kraftstoffzuführung zur Beladung des Brennraums mit Kraftstoff ausschliesslich per Direkteinspritzung vorgenommen wird. Eine Kraftstoffzuführung per Direkteinspritzung verleiht dem Gasmotor eine erhöhte Dynamikfähigkeit, insbesondere im unteren bis hin zum mittleren Drehzahlbereich. Unter Direkteinspritzung wird eine unmittelbare Einspritzung des Kraftstoffes in den Brennraum per Injektor verstanden - d.h. der aus dem Injektor austretende Kraftstoff befindet sich unmittelbar im Hauptbrennraum sowie eine mittelbare Kraftstoffzuführung in den Hauptbrennraum, bei der sich die Kraftstoffeinspritzung durch die Vorkammer und über die Überströmkanäle in den Hauptbrennraum erstreckt.

Diese Vorteilhaftigkeit liegt dann schliesslich deshalb vor, weil in einer zweiten Betriebsart zur Beladung des wenigstens einen Brennraums der benötigte Kraftstoffanteil stattdessen in den Luftansaugtrakt des wenigstens einen Brennraums zugeführt wird und als Folge davon dem Brennraum bereits in Form eines Kraftstoff-Luftgemisches zugeleitet. In dieser Betriebsart kann eine Reduzierung der Abgasemissionen erreicht werden, dies jedoch unter Inkaufnahme einer reduzierten Dynamik des Gasmotors.

Idealerweise wird über die unterschiedlichen Kraftstoff-Zuführungspfade ein Kraftstoff der gleichen chemischen Zusammensetzung zugeführt, d.h. es steht lediglich ein Kraftstoff definierter chemischer Zusammensetzung zur Verfügung, der abhängig von der selektierten Betriebsart entweder per Direkteinspritzung oder aber als Kraftstoff-Luftgemisch dem wenigstens einen Brennraum zugeführt wird.

Für die Umsetzung des Erfindungsgedankens ist es notwendig, dass die Brennräume bzw. der mindestens eine Brennraum des Gasmotors ein Kraftstoffzuführsystem mit mindestens jeweils zwei und vorzugsweise mit jeweils genau zwei separaten Kraftstoff-Zuführungspfaden aufweist. Aufgrund seines Aufbaus weist ein erfindungsgemässer Gasmotor mindestens einen solchen Brennraum mit entsprechenden Brenngas-Zuführungsmöglichkeiten auf, wodurch der Gasmotor in einer ersten oder zweiten Betriebsart betreibbar ist. Bevorzugt wird wenigstens eine definierte Anzahl der Brennräume des Gasmotors bedarfs- bzw. vorteilsabhängig in der ersten oder zweiten Betriebsart betrieben. Idealerweise werden alle Brennräume des Gasmotors entweder in der ersten oder zweiten Betriebsart betrieben.

Ein vorteilhaftes Betreiben eines solchen Gasmotors sieht bspw. folgendes vor: Im Fall eines Motorbetriebs im unteren Drehzahlbereich und dem momentanen Bestehen einer hohen Steigerungsanforderung bezüglich der Motorabgabeleistung wird der Gasmotor in der ersten Betriebsart betrieben, sofern keine andere Situation vorliegt, die dominierend gegenüber der Dynamikanforderung ist, aus der wiederum eine andere Betriebsart-Zuordnung hervorgehen würde. Erfindungsgemäss wird der Gasmotor bei Vorliegen eines Betriebes im mittleren Drehzahlbereich und unter Beibehaltung seines Drehzahl-Drehmomenten-Arbeitspunktes und im Hinblick auf die Prioritätenrangfolge unmittelbar nachfolgenden Anforderung die Emissionen möglichst gering zu halten der Gasmotor in der zweiten Betriebsart betrieben.

Das Verfahren wird nachfolgend exemplarisch für einen Brennraum des Gasmotors beschrieben. Klarerweise darf dies in keinster Art und Weise auf eine solche Einschränkung verstanden werden. Das Verfahren kann entweder für alle oder nur einen Teil der vorhanden Brennräume des Gasmotors ausgeführt werden. Der Gasmotor weist mindestens einen solchen wie im Folgetext beschriebenen Brennraum inklusive der für den seinen Betrieb erforderlichen Peripherie, d.h. die Zuführungs- und Abführungspfade der Betriebsstoffe (Kraftstoff, Luft, Motorenöl, Kühlwasser) den Abgaspfad, die für den bestimmungsgemässen Betrieb erforderliche Mechanik, Elektrik und Elektronik inklusive der Software sowie alles Sonstige auf.

Die Auswahl der passenden Betriebsart bzw. das Umschalten zwischen der ersten und zweiten Betriebsart erfolgt in vorteilhafter Weise in Abhängigkeit des aktuellen Motorbetriebspunktes. Die Lage des aktuellen Motorbetriebspunkts kann in einem Drehzahl-Drehmoment-Kennfeld des Gasmotors definiert sein.

Für die Selektion der jeweiligen Betriebsart ist es vorstellbar, innerhalb des Drehzahl-Drehmoment-Kennfeldes Flächenbereiche zu definieren, wobei den Flächenbereichen die Betriebsarten zugeordnet sind. Liegt der Betriebspunkt des Gasmotors innerhalb eines Flächenbereiches, wird die der Fläche zugeordnete Betriebsart gewählt.

Insbesondere ist im Drehzahl-Drehmoment-Kennfeld ein zusammenhängender und begrenzter erster Flächenteil definiert. Liegt der Betriebspunkt des Gasmotors innerhalb dieses ersten Flächenteils, wird der Gasmotor in der ersten Betriebsart betrieben. Ferner kann ein zusammenhängender und begrenzter zweiter Flächenanteil definiert sein. Der zweite Flächenanteil kann beispielsweise durch die Restfläche der unterhalb der Motorvolllastkurve befindlichen Fläche abzüglich des ersten Flächenteils definiert sein. Liegt der Betriebspunkt des Gasmotors im zweiten Flächenteil, so wird der Gasmotor in der zweiten Betriebsart betrieben.

Das Volumen und/oder das Flächenverhältnis des ersten und/oder zweiten Flächenanteils kann variabel sein, insbesondere in Abhängigkeit wenigstens eines Betriebsparameters des Gasmotors und/oder wenigstens eines Betriebsparameters einer vom Gasmotor angetriebenen Einheit und/oder einer Einsatzbedingung etc. dynamisch festgelegt werden. Beispielsweise kann der erste und/oder zweite Flächenanteil durch eine Drehmoment-Grenzkennlinie separiert sein, wobei eine solche Drehmoment-Grenzkennlinie statisch oder eben dynamisch sein kann. Die Drehmoment-Grenzkennlinie steigt bevorzugt mit zunehmender Drehzahl an, insbesondere verläuft diese monoton, bevorzugt gar streng monoton ansteigend.

Beispielsweise kann die untere Grenze des ersten Flächenanteils durch die Drehmoment-Grenzlinie definiert sein, während die obere Grenze identisch zu der Volllastkennlinie des Gasmotors ist. Ferner kann der erste Flächenanteil durch eine minimale und/oder maximale Drehzahl begrenzt sein. Die minimale Drehzahl kann der Leerlaufdrehzahl oder einer geringfügig erhöhten Drehzahl entsprechen. Die maximale Drehzahl kann der Maximaldrehzahl des Gasmotors entsprechen, jedoch bevorzugt sich in einem Wertebereich zwischen 40% und 75% der Maximaldrehzahl des Gasmotors befinden. Die maximale Drehzahl kann auch auf die Eckdrehzahl des Gasmotors fallen. Als Eckdrehzahl des Gasmotors wird diejenige Drehzahl verstanden, ab deren Überschreitung das drehzahlbezogene maximale Drehmoment des Motors eine abnehmende Tendenz aufweist.

Wie bereits vorstehend erwähnt wurde, kann das Volumen und/oder das Flächenverhältnis des ersten und zweiten Flächenanteils variabel sein, insbesondere abhängig von mindestens einem Betriebszustandsparameter des Gasmotors und/oder von mindestens einem Betriebszustandsparameter einer durch den Gasmotor angetriebenen Einheit - z.B. einer mobilen Arbeitsmaschine - und/oder einer Einsatzbedingung etc. dynamisch eingestellt werden. Mit Bezug zu der vorgenannten Drehmoment-Grenzkennlinie bedeutet dies, dass die Drehmoment-Grenzkennlinie im Drehzahl-Drehmoment-Kennfeld dynamisch änderbar ist. Denkbar ist beispielsweise die Definition einer minimalen und/oder maximalen Drehmoment-Grenzkennlinie innerhalb dessen die Lage der Drehmoment-Grenzkennlinie eine dynamische Änderbarkeit aufweist.

Vorstellbar ist es auch, dass abweichende Drehmoment-Grenzkennlinien für den Übergang von der ersten Betriebsart zur zweiten Betriebsart und den Übergang von der zweiten Betriebsart zur ersten Betriebsart definiert sind. Beispielsweise verlagert sich die Drehmoment-Grenzkennlinie abhängig davon, in welcher Betriebsart der Gasmotor aktuell betrieben wird.

Gemäß einer ersten Ausführungsform kann vorgesehen sein, dass der Übergang zwischen der ersten und zweiten Betriebsart diskret erfolgt, das heißt bei einem entsprechenden Umschalten der Betriebsart wird bspw. die Direkteinspritzung umgehend gestoppt und stattdessen der gesamte Kraftstoffanteil per Zuleitung in den Ansaugtrakt zugeführt.

Vorstellbar ist es ebenfalls, dass ein Umschalten zwischen den Betriebsarten erst dann erfolgt, wenn sich der Betriebspunkt des Gasmotors für eine bestimmte Mindestdauer innerhalb des komplementären Flächenanteils befindet.

Alternativ zu der vorgenannten Vorgehensweise mit direkter Umschaltung ist es ebenso denkbar, dass im Umschaltprozess eine hybride Übergangsphase vorgesehen ist, während innerhalb desselben Arbeitsspiels eines Zylinders das Zuleiten von Kraftstoff in jenen Brennraum sowohl per Direkteinspritzung als auch per Zuführung in den Ansaugtrakt jenes Brennraums erfolgt. Die hybride Übergangsphase wird als dritte Betriebsart bezeichnet. Das Verhältnis des per Direkteinspritzung und Zuleitung in den Ansaugtrakt zugeführten Kraftstoffanteils kann fest vorgegeben oder alternativ dynamisch festgelegt werden. Denkbar ist es, dass die dritte Betriebsart automatisch beim Wechsel zwischen der ersten und zweiten Betriebsart temporär für eine definierbare Zeitspanne ausgeführt wird. Möglich ist es ebenso, stattdessen einen dritten Flächenanteil im Drehzahl-Drehmoment-Kennfeld zu definieren und die dritte Betriebsart dann auszuführen, wenn der Betriebspunkt des Gasmotors innerhalb des dritten Flächenanteils liegt.

Der dritte Flächenanteil kann bevorzugt zwischen dem ersten und zweiten Flächenanteil liegen, d.h. vorzugsweise einen flächigen Übergangsbereich zwischen beiden Flächenanteilen bilden. Denkbar ist es, dass die jeweiligen Drehmoment-Grenzkennlinien zwischen erstem und dritten Flächenanteil und/oder drittem und zweiten Flächenanteil statisch sind oder dynamisch variabel sind, insbesondere in Abhängigkeit wenigstens eines Betriebszustandsparameters des Gasmotors und/oder eines Betriebszustandsparameters des vom Gasmotor anzutreibenden Systems.

Die Selektion der passenden Betriebsart erfolgt wie eingangs bereits erwähnt in Abhängigkeit des aktuellen Arbeitspunktes des Gasmotors im Drehzahl-Drehmoment-Kennfeld. In Ergänzung dazu können weitere Bedingungen für die Selektion der passenden Betriebsart herangezogen werden. Denkbar ist es beispielsweise, neben dem aktuellen Arbeitspunkt auch eine vorliegende Soll-Beschleunigungsanforderung zu berücksichtigen. Denkbar ist ebenso, dass neben dem aktuellen Arbeitspunkt eine Vorgabe zu einer Abgasemission und/oder des Kraftstoffverbrauchs bei der Selektion der Betriebsart berücksichtigt wird. Die vorstehend genannten Kriterien können ebenfalls die vorbeschriebene Verlagerung der Drehmoment-Grenzkennlinie innerhalb des Korridors bewirken.

Bei der Auswahl der Betriebsart darf eine Soll-Beschleunigungsanforderung und/ oder das Bestreben von Energieeffizienz sinnvollerweise jedoch nur insoweit berücksichtigt, wenn durch deren Berücksichtigung keine höherrangigen Betriebsbedingungen, wie bspw. die Sicherheit für Maschine und Umgebung sowie Abgasemissionen etc.) verletzt werden würde.

Die Einbringung des Kraftstoffes in den Ansaugtrakt kann beispielsweise per Einspritzung in das Saugrohr erfolgen erfolgen, über das sich die Luft- bzw. Kraftstoff-Luftgemisch-Versorgung für eine Vielzahl von Brennräumen und üblicherweise für sämtliche Brennräume einer Zylinderreihe erstreckt. Die Einspritzung kann auch stromabwärts davon erfolgen und zwar in einem Abschnitt des Ansaugtrakts in dem das durch die Kraftstoffeinspritzung entstehende Kraftstoff-Luftgemisch bereits dediziert einem einzigen Brennraum zugeführt wird. Ebenso könnte der Gasmotor mit einem Gasmischer ausgestattet sein und sodann die Kraftstoffzuführung klarerweise derart ausgeführt sein, dass dieser seine Funktion zur Bildung des Kraftstoff-Luftgemisch ausübt.

Erfindungsgemäß weist wenigstens ein Brennraum oder wenigstens einer der Brennräume eine funktional zugeordnete Vorkammer auf. Vorhandene Vorkammern in einem erfindungsgemässen Gasmotor sind als aktive Vorkammern ausgeführt. Wie dem Fachmann bekannt, verfügen aktive Vorkammern über eine eigene Kraftstoffzufuhr, die sich nicht über den Hauptbrennraum erstreckt, was den Vorteil einer höheren Flexibilität zur Einstellung des Kraftstoff-Luftverhältnis innerhalb der Vorkammer bietet.

Erfindungsgemäß kommt eine solche aktive Vorkammer zum Einsatz, über die zumindest bis zur Abdeckung eines bestimmten Momentanbedarfs auch die Kraftstoffzuführung in den Hauptbrennraum erfolgt. Dabei ist der Kraftstoff-Zuführungspfad in die Vorkammer derart dimensioniert, dass eine ausreichende Kraftstoffmenge in den Hauptbrennraum über die Vorkammer einbringbar ist, insbesondere zumindest bis zu einer gewissen Leistungsabgabe des Gasmotors. Präziser ausgedrückt kann zumindest bis zu einem gewissen Kraftstoffmomentanbedarf eine Beladung des Hauptbrennraums ausschliesslich über die aktive Vorkammer erfolgen, ohne dabei einen ergänzenden Kraftstoffanteil über einen weiteren Kraftstoff-Zuführungspfad einbringen zu müssen.

Denkbar ist es ebenso, dass die aktive Vorkammer über einen eigenen Luftanschluss verfügt, wodurch ihr unabhängig zur Fluidverbindung zum Hauptbrennraum Luft zugeführt werden kann.

Die Kraftstoffbereithaltung für den Kraftstoff-Zuführungspfad der Direkteinspritzung und/ oder den Pfad für die Kraftstoffzuführung in den Ansaugtrakt kann aus einem Zwischenspeicher erfolgen. In einer Ausführungsform steht ein gemeinsam von beiden Kraftstoffpfaden genutzter Zwischenspeicher zur Verfügung. Vorzugsweise steht ein für beide Kraftstoffpfade als gemeinsam genutzte Primärquelle dienender Kraftstofftank zur Verfügung. Hierbei kann ein Druckspeicher zum Einsatz kommen, der unter Erfüllung dieser Speicherfunktion lediglich bis zu einem Druckniveau entleert werden kann, welches als ausreichend hoch zur Bedarfsabdeckung der Kraftstoffzuführung in den Ansaugtrakt sowie als ausreichend hoch zur Bedarfsabdeckung der Direkteinspritzung erachtet werden kann. Sofern die Kraftstoffzuführung zur Ermöglichung einer-Direkteinspritzung und die Kraftstoffzuführung in die aktive Vorkammer über voneinander separierte Kraftstoff-Zuleitungen erfolgt, gilt das Entsprechende. Im Maximalfall könnte jeder dieser drei Kraftstoff-Zuführungspfade mit einem jeweils eigenen Zwischenspeicher ausgestattet sein. Ferner könnte ein Zwischenspeicher für zwei Kraftstoff-Zuführungspfade zur Verfügung stehen, d.h. eine Verzweigung jener Kraftstoffpfade erfolgt strömungsabwärts jenes Zwischenspeichers. Eine der letztgenannten Konstellationen entsprechende Ausführung könnte derart ausgeführt sein, dass ein erster Zwischenspeicher vorhanden ist aus dem die Kraftstoffbedarfsmengen für die Vorkammer und die Direkteinspritzung bezogen werden sowie ein zweiter Zwischenspeicher, um die Kraftstoffverfügbarkeit zur Versorgung des Hauptbrennraums abzusichern. Weitere mögliche und zugleich sinngebende Konstellationen sind selbsterklärend.

Gemäß bevorzugter Ausführung des Verfahrens kommt als Kraftstoff molekularer Wasserstoff oder ein überwiegend molekularen Wasserstoff enthaltendes Kraftstoffgemisch zum Einsatz.

Neben dem erfindungsgemäßen Verfahren betrifft die vorliegende Erfindung einen Gasmotor, der mindestens über eine Kraftstoffzuführungsvorrichtung umfasst. Ein Kraftstoff-Zuführungspfad dient zur Direkteinspritzung von Kraftstoff in den Brennraum, während ein weiterer Kraftstoff-Zuführungspfad eine Zuleitung von Kraftstoff in den Luftansaugtrakt jenes Brennraums ermöglicht. Erfindungsgemäß wird vorgeschlagen, dass der Gasmotor wenigstens eine Motorsteuerung aufweist, die konfiguriert ist, das Verfahren gemäß der vorliegenden Erfindung auszuführen. Demzufolge ergeben sich für den erfindungsgemäßen Gasmotor dieselben Vorteile und Eigenschaften, wie sie bereits vorstehend anhand des erfindungsgemäßen Verfahrens aufgezeigt wurden. Auf eine wiederholende Beschreibung wird aus diesem Grund verzichtet.

Mit dem erfindungsgemäßen Gasmotor kann unter alleiniger Nutzung eines einzigen dieser beiden Kraftstoff-Zuführungspfade eine Abdeckung des Kraftstoffmomentanbedarfs bis zu einem bestimmten Leistungsbereich des Gasmotors möglich sein, der mindestens 60 % der Maximalleistung des Gasmotors entspricht.

Weitere Vorteile und Eigenschaften der Erfindung sollen nachstehend anhand eines in den Figuren dargestellten Ausführungsbeispiels näher verdeutlicht werden. Es zeigen:
- Figur 1:: eine schematische Skizze des erfindungsgemäßen Gasmotors mit den Kraftstoff-Zuführungspfaden für einen Hauptbrennraum,
- Figur 2:: das Drehzahl-Drehmoment-Kennfeld des erfindungsgemäßen Gasmotors mit den unterteilten Flächenanteilen für die erste und zweite Betriebsart,
- Figur 3:: ein modifiziertes Drehzahl-Drehmoment-Kennfeld des erfindungsgemäßen Gasmotors mit einem Übergangsbereich zwischen der ersten und zweiten Betriebsart und
- Figur 4:: eine Diagrammdarstellung der zugeführten Kraftstoffmenge bzw. des Zylinderdrucks über der Zeit bzw. dem Kurbelwellenwinkel des Gasmotors.

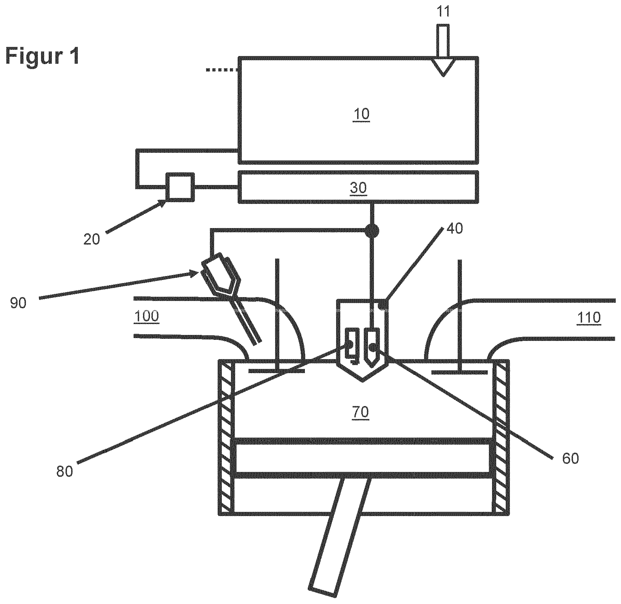

Figur 1 zeigt eine schematische Übersicht der Kraftstoffversorgungsvorrichtung eines Hauptbrennraums 70 des erfindungsgemäßen Gasmotors für die Anwendung des erfindungsgemäßen Verfahrens. Mit dem Bezugszeichen 10 ist der Haupttank der durch den Gasmotor angetriebenen Motoranwendung gezeigt, wobei es sich beispielsweise um eine mobile Arbeitsmaschine handeln kann. In der bevorzugten Ausführung der Erfindung dient der Haupttank 10 zur Speicherung von Wasserstoff. In einer möglichen Ausführung kann der Innendruck des Haupttanks 10 bei Vollbefüllung einen Wert von bspw. 350 bar aufweisen und eine Nachbetankung spätestens bei einem Absinken des Druckniveaus auf etwa 50 bar erforderlich werden. Vorzugsweise handelt es sich bei jenem Minimaldruck um einen festen Schwellwert. Die Nachbetankung erfolgt über den Anschluss 11.

Unter Betrieb des Gasmotors strömt der Kraftstoff aus dem Haupttank 10 über einen Druckregler/Druckminderer 20 in einen Kraftstoff-Zwischenspeicher 30, das im hier gezeigten Ausführungsbeispiel zur Bereitstellung des Kraftstoffes für beide Kraftstoff-Zuführungspfade dient. Vom Kraftstoff-Zwischenspeicher 30 erstreckt sich eine Kraftstoffversorgungsleitung, zu einem entsprechend angeordneten Kraftstoffinjektor 60, über den eine Kraftstoff-Direkteinspritzung in die Vorkammer 40 ausführen zu können. Dabei mündet die Düse des Kraftstoffinjektors 60 in die Vorkammer 40, wodurch Kraftstoff unmittelbar in die Vorkammer 40 und somit mittelbar in den Hauptbrennraum 70 direkt einspritzbar ist. In der Vorkammer 40 befindet sich zudem ein Organ zur Auslösung der Primärzündung, bspw. eine Zündkerze 80. Auch in Bezug auf die in der Figur 1 gezeigten Vorkammer 40 handelt es sich um eine Prinzipdarstellung. Dem Fachmann ist bekannt, dass sich weder der komplette Kraftstoffinjektor 60 noch die komplette Zündkerze 80 innerhalb der Vorkammer 40 befinden. Die Anordnung dieser beiden Organe in einem realen Aufbau gestaltet sich derart, dass die Kraftstoffeinspritzung direkt in die Vorkammer erfolgt und sich der vollständige Zündfunke innerhalb der Vorkammer ausbreitet, derweil sich andere Bauteilbereiche des Kraftstoffinjektors 60 und der Zündkerze 80 ausserhalb der Vorkammer befinden.

Eine zweite Kraftstoffversorgungsleitung verläuft vom Kraftstoff-Zwischenspeicher 30 zu einem Injektor 90, der Kraftstoff in einen zu dem Brennraum 70 hinführenden Bereich des Luftansaugtraktes zuleitet, hier unmittelbar in den dedizierten Lufteinlasskanal 100 des gezeigten Brennraumes 70. Es handelt sich hier also um eine Multi-Point-Einspritzung des Gasmotors. Der Injektor 90 kann bspw. mit einem Einspritzdruck von etwa 10 bar arbeiten. Neben dem Lufteinlasskanal des dargestellten Zylinders ist noch der Luftauslasskanal mit 110 bezeichnet.

Der erfindungsgemäße Gasmotor ermöglicht einen Kraftstoff-Zufluss in den betrachteten Hauptbrennraum 70 basierend auf einem ersten Kraftstoff-Zuführungspfad, der sich über die aktive Vorkammer 40 erstreckt. Daneben steht ein zweiter Kraftstoff-Zuführungspfad über den betreffenden Saugeingang 100 zur Verfügung. Zur Vorbereitung des nachfolgend eintretenden Expansionsvorgangs innerhalb des Hauptbrennraums 70 wird eine Kraftstoffzuführung in die aktive Vorkammer 40 vorgenommen, wobei in einer ersten Betriebsart auch das Zuführen von Kraftstoff in den Hauptbrennraum 70 zur dortigen Generierung von Kraftstoff-Luftgemisch über die aktive Vorkammer erfolgt. Prinzipiell kann diese Kraftstoffmenge durch ein getaktetes Öffnen und Unterbrechen des Kraftstoffflusses, insbesondere des Injektors 60, auf mehrere Portionen verteilt werden oder aber in Form einer Einzelportion zugeführt werden. Der letzte Schliessvorgang des Injektors 60 muss derart koordiniert werden, dass zum vorgesehenen Zündzeitpunkt die Vorkammerladung ein gewolltes Kraftstoff-Luftverhältnis aufweist. Die zur Bereitstellung der Vorkammerladung benötigte Kraftstoffmenge kann als separierte Kraftstoffportion durch ein zwischenzeitliches Unterbrechen des Kraftstoffflusses bereitgestellt werden oder durch einen verbleibenden Anteil einer Kraftstoffportion, deren erster Teil dem Hauptbrennraum 70 zugeführt wird, derweil ein gewisser Rest in der Vorkammer 40 verbleibt.

In einer zweiten Betriebsart wird der zur Kraftstoff-Luftgemischbildung im Hauptraum 70 benötigte Kraftstoff über den Saugeingang 100 zugeführt. Gemäss einer vorteilhaften Ausführung kann während der aktiven zweiten Betriebsart ebenfalls eine Kraftstoffzuführung in die aktive Vorkammer 40 vorgesehen sein, dann jedoch nur zur Versorgung der originären Funktion(en) der aktiven Vorkammer 40. Dies betrifft das Bereitstellen von Kraftstoff, damit zum gegebenen Zeitpunkt in der Vorkammer 40 ein zündfähiges Kraftstoff-Luftgemisch existiert, welches jedoch bevorzugt einen Kraftstoff-Überschuss aufweist, der dann eine zusätzliche Zündaktivator-Funktion des sich im Hauptbrennraum 70 befindenden Kraftstoff-Luftgemisches ausüben kann; insbesondere zutreffend dann, wenn das im Hauptbrennraum 70 vorgesehene Kraftstoff-Luftgemisch einen hohen Luftüberschuss enthält.

Je nach der vorhandenen Art und den Momentanbedingungen der anwendungsbezogenen Eigenschaften des im Haupttank 10 On-board gespeicherten Kraftstoffvorkommens und den erforderlichen bzw. angestrebten Kraftstoff-Zuführungsdrücken der jeweiligen Brennraum-Einheit, d.h. dem Hauptbrennraum 70 und der aktiven Vorkammer 40 kann entlang des Kraftstoff-Zuführpfades über den Saugeingang 100 ein Kraftstoff-Zwischenspeicher erforderlich oder zumindest nützlich sein. Bei entsprechend kompatiblen motorseitig bedingten Anforderungen an den Kraftstoffzustand - insbesondere das Kraftstoffdruckniveau betreffend - kann ein Kraftstoff-Zwischenspeicher 30 gemeinsam von beiden Kraftstoffpfaden genutzt werden. In einem solchen Fall entzweien sich die beiden Kraftstoffpfade, wie in Figur 1 dargestellt, vorteilhafterweise strömungsabwärts des Kraftstoff-Zwischenspeichers 30. Alternativ können die zwei Kraftstoffpfade jedoch auch bereits über getrennte Kraftstoff-Zwischenspeicher verfügen, damit bspw. für diese zwei Pfade die Kraftstoffbereithaltung bei unterschiedlichen Druckniveaus erfolgen kann.

Wie bereits anhand von Figur 1 erläutert wurde, trennen sich die beiden Kraftstoffpfade strömungsabwärts des gemeinsam genutzten Kraftstoff-Zwischenspeichers 30 auf. Demgemäss ist leicht nachvollziehbar, dass die Kraftstoffbereithaltung für jenes hier gewählte Ausführungsbeispiel des erfindungsgemässen Gasmotors aus einem gemeinsam genutzten Kraftstoff-Zwischenspeicher 30 zur Versorgung beider Kraftstoffpfade sowie einem gemeinsam genutzten, als Primärquelle dienenden Haupttank 10 erfolgt, der im dargestellten Ausführungsbeispiel der Erfindung als Kraftstoff-Druckspeicher ausgeführt ist. In einer möglichen konkreten Produktumsetzung kann ein als Kraftstoff-Druckspeicher ausgeführter Haupttank 10 in Erfüllung dieser Speicherfunktion lediglich bis zu einem bestimmten verbleibenden Druckniveau (hier etwa 50 bar) entleert werden, welches als ausreichend hoch zur Aufrechterhaltung der jeweiligen Funktionstüchtigkeit der Saugrohreinspritzung sowie der aktiven Vorkammer 40 erachtet werden kann. Letzteres insbesondere auch dann, wenn die aktive Vorkammer 40 zur Kraftstoffversorgung des Hauptbrennraums 70 dienen soll. In Bezug auf den Aufbau und seiner Dimensionierung weist der erste Kraftstoffpfad eine ausreichend hohe Kraftstoff-Förderkapazität auf, über die eine Kraftstoffzuführrate von mindestens 30 % bis hin zur Betriebssituation des maximalen, von dem Gasmotor abverlangten Kraftstoff-Momentanverbrauch abgedeckt werden kann. Bevorzugt liegt diese bautechnisch bedingte maximale Kraftstoffzuführungsrate zwischen 40 % und 80 % jenes Kraftstoff-Maximalbedarfs. Ganz besonders bevorzugt weisen der Aufbau und die Dimensionierung des ersten Kraftstoffpfads eine ausreichend hohe Kraftstoffzuführungsrate auf, über die mindestens 40 % bis 70 % des in der Betriebssituation des maximalen Kraftstoffmomentanverbrauchs vorliegenden Wertes abdeckbar ist. Diese Limitierung begründet sich daher, dass ein Betrieb des Gasmotors unter der ersten Betriebsart bei Vorliegen einer entsprechend hohen Auslastung keinen Mehrwert bieten würde, wohingegen durch eine Aussparung dieses oberen Leistungsbereiches Bauraumvorteile entstehen können und/oder der Gesamt-Strömungsquerschnitt der Überströmkanäle ausschliesslich in Bezug auf die Vorkammerfunktion optimiert werden kann und nicht etwa deshalb oberhalb dieses Optimalwertes ausgeführt werden muss, damit die Kraftstoff-Einspritzungsrate mengenmässig darüber hinaus gehen könnte oder gar bis hin zum Kraftstoff-Maximalbedarf abgedeckt werden könnte, obgleich sich hierdurch kein Vorteil für den Betrieb des Gasmotors ergeben würde.

In Bezug auf den Aufbau und seiner Dimensionierung ermöglicht der zweite Kraftstoffpfad eine ausreichend hohe Kraftstoffzuführungsrate unter deren alleiniger Nutzung der von dem Gasmotor ausgehende maximale Kraftstoffmomentanbedarf abgedeckt werden kann.

In Bezug auf die in Figur 1 angedeutete Saugrohreinspritzung handelt es sich bevorzugt um eine Mehrpunkteinspritzung, bei der jeweils ein Injektor 90 funktional genau einem Hauptbrennraum 70 zugeordnet ist. Klarerweise ist ein Injektor 90 derart ausgeführt und derart angeordnet, damit hierdurch das Bestehen einer möglichst guten Kraftstoff-Luft-Gemischbildung im Hauptbrennraum 70 weitgehend und idealerweise weitestgehend begünstigt wird. Zwar weniger bevorzugt, aber dennoch alternativ möglich ist das Vorhandensein einer solchen Mehrpunkt-Einspritzung, bei der über einen Ort einer Kraftstoff-Einspritzung mehrere Hauptbrennräume 70 ihre Kraftstoffzuführung erhalten. Ebenfalls möglich ist eine sogenannte Single-Point Kraftstoff-Einspritzung. Selbsterklärend existiert hierbei ein einziger Kraftstoff-Zuführungsort in das Saugrohr einer Zylinderreihe, über die sämtliche daran angegliederten Hauptbrennräume 70 ihre Kraftstoffzuführung erhalten.

Sofern einem Hauptbrennraum 70 funktional eine aktive Vorkammer 40 zugeordnet ist, wird aufgrund des sich hierdurch bietenden Vorteilspotenzials die Vorkammerfunktion bevorzugt permanent genutzt. Hierfür erfolgt das bestimmungsgemässe Zuführen von Kraftstoff, d.h. das Öffnen und Schliessen ihres Kraftstoffzuführungspfades zu den entsprechenden Kurbelwellen-Winkelpositionen, damit zum Zündzeitpunkt innerhalb der aktiven Vorkammer 40 ein funktionsgerechtes Kraftstoff-Luftgemisch existiert, dieses bestimmungsgemäss gezündet wird, damit der Energieeintrag in den Hauptbrennraum 40 in einer optimalen Art und Weise abläuft.

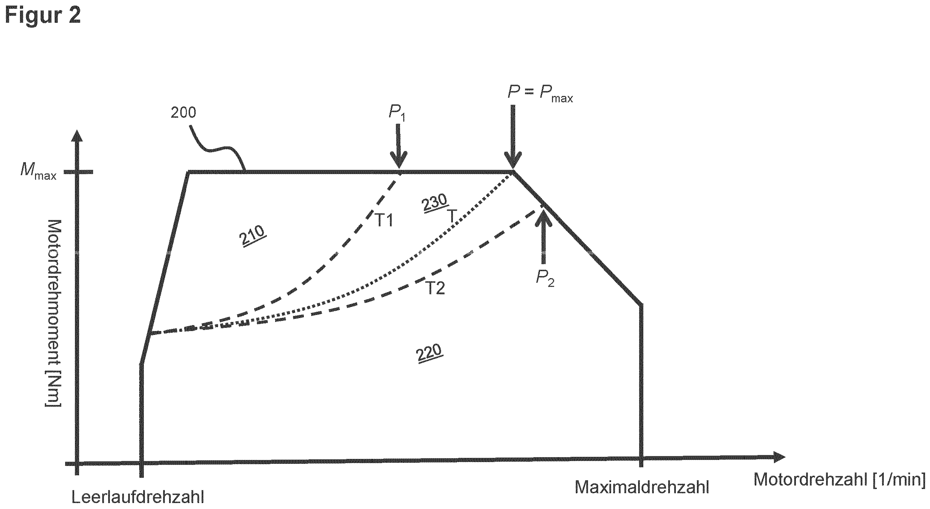

Figur 2 zeigt den schematischen Drehzahl-Drehmomenten-Arbeitsbereich eines erfindungsgemäßen Gasmotors. Klarerweise befindet sich der Arbeitsbereich einer Verbrennungskraftmaschine unterhalb ihrer Volllastkennlinie 200. Die exemplarische Vollastkennlinie 200 für einen erfindungsgemässen Gasmotors ist hier in einer schematischen Form durch fünf Streckenabschnitte aufgezeigt. Gemäß der Erfindung werden die Betriebsart und damit der Kraftstoffzuführungspfad in Abhängigkeit des aktuellen Arbeitspunktes des Gasmotors ausgewählt. Dazu werden im Drehzahl-Drehmomenten-Arbeitsbereich zwei jeweils zusammenhängende Bereiche bzw. Flächenanteile definiert, und zwar ein erster Flächenanteil 210 sowie ein zweiter Flächenanteil 220. Liegt der Arbeitspunkt innerhalb des ersten Flächenanteils 210, so arbeitet der Gasmotor in der ersten Betriebsart. Liegt der Arbeitspunkt hingegen innerhalb des zweiten Flächenanteils 220, erfolgt das Betreiben des Gasmotors auf die zweite Betriebsart.

Im ersten Drehzahl-Drehmoment-Arbeitsbereich 210 soll der Gasmotor in der ersten Betriebsart arbeiten, wodurch im Umsetzungsfall ein erhöhtes Dynamikpotenzial besteht, welches alternativ zu seiner vollständigen Ausschöpfung im Ganzen oder teilweise zur Energieeffizienz-Erhöhung durch ein sogenanntes Downspeeding (s.u.) des Gasmotors nutzbar ist. Im zweiten Drehzahl-Drehmoment-Arbeitsbereich 220 soll der Gasmotor in der zweiten Betriebsart arbeiten, was im Umsetzungsfall eine Absenkung der Abgas-Emissionen bewirkt. Demzufolge besteht eine Anpassungsfähigkeit des Gasmotors, wodurch sich aufgrund der Auswahlmöglichkeit zwischen zwei Betriebsarten ein Optimierungspotenzial bietet, welches Betriebslauf-begleitend nutzbar ist.

Die unter Vorliegen der ersten Betriebsart bestehende Potenzialerhöhung der Motordynamik beruht im Wesentlichen darauf, dass bei einer Direkteinspritzung des Kraftstoffes der Kraftstoffzustrom in den betrachteten Brennraum weitaus weniger mit dem Luftzufluss in diesen Brennraum konkurriert. Bei Vorliegen einer höheren Motordrehzahl ist eine relativ kurzfristig einsetzende und ihren neuen Bedarfsendwert erreichende Steigerung der Aufnahmeleistung der Turbine des Abgasturboladers möglich, indem der über den Wastegatepfad abgeleitete Abgasteilstrom reduziert wird, wodurch bei einer Umsetzung jener Möglichkeit die Turbine innerhalb eines vergleichsweise kurzen Zeitraums eine höhere Leistung erhält, was wiederum zu einer höheren Ladeluftverdichtung führt und demzufolge der Ladeluftverlust, der sich aufgrund einer Konkurrenz mit dem zuzuführenden Brenngas ergibt, kompensiert werden kann. Sofern dieser potenzielle Dynamik-Zugewinn, der beim Betreiben des Gasmotors in der ersten Betriebsart besteht, nicht vollständig genutzt werden soll, kann der Gasmotor auf sich allein bezogen die jeweils benötigte Abgabeleistung unter einer geringeren Motordrehzahl bereitgestellt werden. Wie dem Fachmann bekannt ist, führt ein Downspeeding zu einer Erhöhung des Motorwirkungsgrades. Unter Verwendung von Wasserstoff, der im Vergleich zu anderen Kraftstoffen bekanntermassen eine besonders geringe Dichte aufweist, fällt der zuvor beschriebene positive Effekt besonders deutlich aus.

Ein weiterer Vorteil der erfindungsgemässen Lösung ist, dass der in die aktive Vorkammer 40 mündende Kraftstoffpfad, über den auch die gesamte Kraftstoffzuführung für eine Haupteinspritzung in den Hauptbrennraum erfolgen kann, nicht zwingenderweise entsprechend gross ausgelegt sein muss, um auf sich allein gestellt den Betriebsfall des maximalen Kraftstoffmomentanbedarfs abdecken zu können. Dies ist deshalb von grossem Nutzwert, weil die Kraftstoff-Zugänglichkeit einer Vorkammer stark eingeschränkt ist; insbesondere dann, wenn es sich um eine Verbrennungskraftmaschine handelt, die wiederum für mobile Anwendungen auszulegen ist, weil bei einem solchen Antriebsprodukt eine möglichst hohe Leistungsdichte anzustreben ist und gleichermassen überstehende Einzelmasse zu vermeiden sind. Der Hauptvorteil dafür ist ein hoher Zugewinn an Sicherheit dafür, dass der Gesamtströmungsquerschnitt der Überströmkanäle - d.h. der Fluidverbindung zwischen der Vorkammer und dem Hauptbrennraum - optimal für das Einschiessen der Zündfackeln in den Hauptbrennraum ausgelegt werden kann und im Hinblick auf diese Funktionalität nicht etwa deshalb ein gewisses Optimierungspotenzial nicht vollends ausgeschöpft werden kann, weil der Gesamtströmungsquerschnitt oberhalb jenes Optimums dimensioniert ist, um die Fähigkeit dafür aufzuweisen, dass auch der Betriebsfall des maximalen Kraftstoffmomentanverbrauchs unter alleiniger Nutzung des sich über die aktive Vorkammer erstreckenden Kraftstoffzuführungspfads abgedeckt werden kann.

Die beiden Flächenanteile 210, 220 in der Figur 2 sind durch eine Drehmoment-Grenzkennlinie T separiert, die sich von einer minimalen Drehzahl nahe der Leerlaufdrehzahl bis zu der Eckdrehzahl, d.h. dem Betriebspunkt der maximalen Motorabgabeleistung erstreckt. Die Drehmoment-Grenzkennlinie kann jedoch dynamisch variiert werden, und zwar innerhalb des Korridors 230, der durch die maximale Drehmoment-Grenzkennlinie T1 und die minimale Drehmoment-Grenzkennlinie T2 definiert ist. Die Änderung der Drehmoment-Grenzkennlinie T kann abhängig von wenigstens einem Betriebszustand des Gasmotors erfolgen. Der Schnittpunkt der maximalen Drehmoment-Grenzkennlinie T1 mit der Vollastkennlinie liegt bei etwa 40% der Maximaldrehzahl des Gasmotors, der Schnittpunkt der minimalen Drehmoment-Grenzkennlinie T2 bei etwa 75 % der maximalen Motordrehzahl.

Die Verschiebung der Drehmoment-Grenzkennlinie T innerhalb des zulässigen Korridors 230, kann bspw. davon abhängig ausgestaltet sein, ob eine jeweils aktuell vorliegende Steigerungsanforderung bezüglich der Abgabeleistung oder bei Bestehen einer solchen Anforderung ein entsprechendes anwendungsbedingtes Bereithaltungspotenzial unter Beibehaltung des Betriebsbereiches ausreichend abgedeckt werden kann oder überflüssigerweise überschritten werden könnte. Umsetzungstechnisch sind solche entsprechenden Grenzverschiebungen in unterschiedlichen Ausführungen möglich, bspw. durch eine adaptive Steuerung. Ferner ist es denkbar, dass eine solche Grenze lediglich generell oder bei der Überschreitung einer gewissen Vorgrenze nur durch das bewusste Eingreifen des Bedieners möglich ist. Jene Variabilität könnte klarerweise auch dahingehend eingeschränkt sein, dass eine Änderung nur durch eine Parameteränderung in der Motorsteuerung möglich ist, die nur durch hierfür autorisierte Personen durchgeführt werden darf, was durch einen entsprechenden Schutz erzielt werden kann.

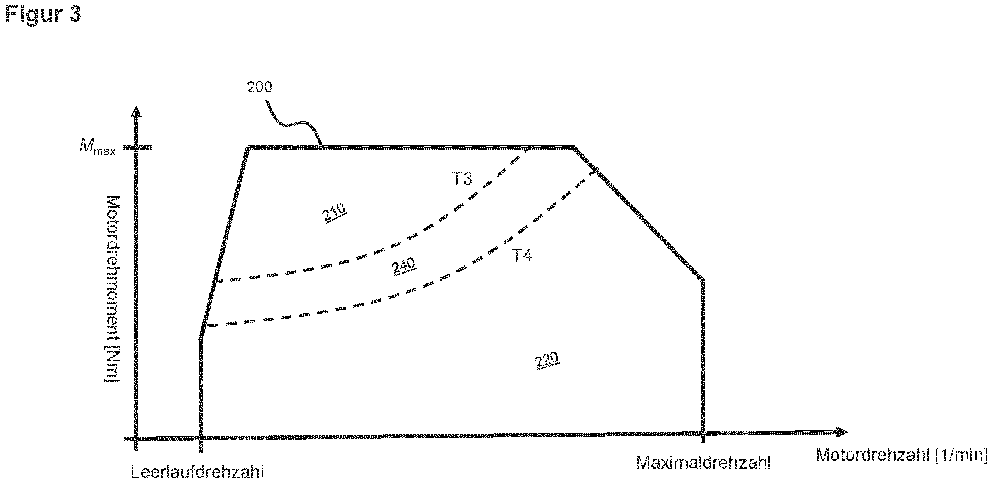

Figur 3 zeigt eine modifiziertes Drehzahl-Drehmoment-Kennfeld, das in insgesamt drei Flächenanteile 210, 220, 240 unterteilt ist. Der erste Flächenanteil dient wie in Figur 2 zur Festlegung der ersten Betriebsart mit Direkteinspritzung über die Vorkammer 40. Liegt der Arbeitspunkt im zweiten Flächenteil 220, so erfolgt die Kraftstoffzuführung ausschliesslich über den Injektor 90 in den Saugeingang 100. Zwischen dem ersten und zweiten Flächenteil 210, 220 befindet sich hier jedoch ein schmaler Übergangsbereich 240, der vom ersten Flächenteil durch die Drehmoment-Grenzkennlinie T3 und vom zweiten Flächenteil 220 durch die Drehmoment-Grenzkennlinie T4 separiert ist. Liegt der Arbeitspunkt des Gasmotors innerhalb dieses Übergangsbereichs 240, so arbeitet der Gasmotor mit einer kombinierten Direkt- und Saugrohreinspritzung über beide Kraftstoffpfade, wobei das Verhältnis der per Direkt- und Saugrohreinspritzung eingebrachten Kraftstoffmengen entweder fest vorgegeben oder dynamisch variabel sein kann. Rein exemplarisch könnten 30 % der Kraftstoffversorgung über die aktive Vorkammer 40 in den Hauptbrennraum 70 gelangen, derweil der verbleibende Anteil mittels einer Saugrohreinspritzung bereitgestellt wird. Für den Fall, dass ein erfindungsgemässer Gasmotor gemäss der Beschreibung dieses Absatzes betrieben wird, versteht sich anhand des vorausgegangenen Textes die Art der Nutzung einer passiven oder aktiven Vorkammer von selbst.

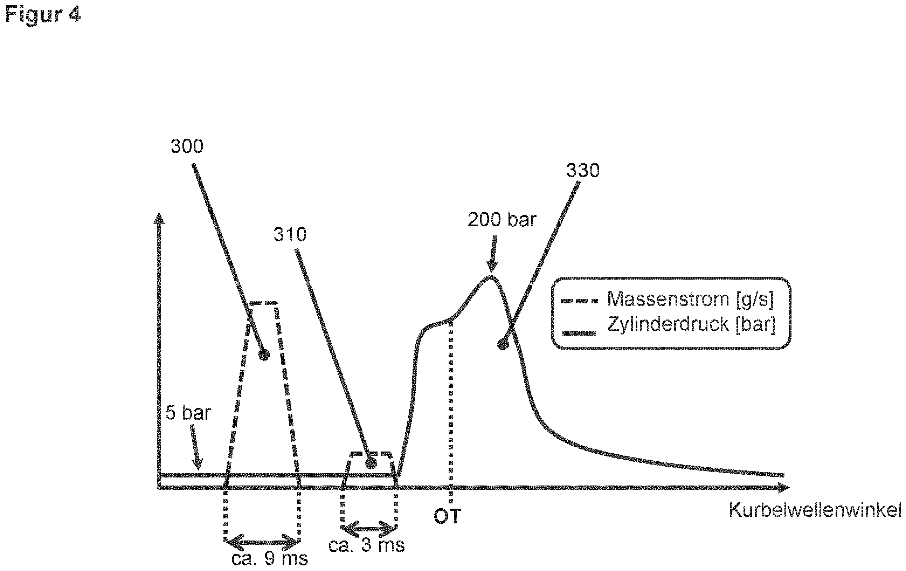

In Figur 4 ist für die zweite Betriebsart des Gasmotors der Vorgang des vereinfacht dargestellten Kraftstoff-Zustroms PFI über die Saugrohreinspritzung, der KraftstoffZustrom APC in die aktive Vorkammer 40 und das Druckniveau innerhalb des Hauptbrennraums 70 für die Brennraum-Einheit dargestellt. Es handelt sich um eine zeitliche Abfolge bzw. um eine Sequenz, die sich entlang des Kurbel- bzw. Nockenwellenwinkel-Voranschreitens vollzieht. Für eine aufgeladene Verbrennungskraftmaschine unter guter Auslastung im Anwendungsbereich schwerer Nutzfahrzeuge und entsprechenden Off-road Anwendungen beläuft sich der Brennraum-Innendruck während des Ansaugtaktes in einer Grössenordnung von ca. 2 bar. Im Fall eines Magermotors, d.h. eine Verbrennungskraftmaschine, die unter einem sehr hohen Luftüberschuss betrieben wird, was einer bevorzugten Betriebsweise eines erfindungsgemässen Gasmotors entspricht, kann jener Druck einen Wert oberhalb von 2,5 bar erreichen und bevorzugt einen Wert zwischen 4 bar und 6 bar erreichen und besonders bevorzugt einen Wert 4,5 bar bis 5,5 bar erreichen. Im betrachteten Beispiel eines Wasserstoffmotors mit einem Einzelzylinder-Hubraumvolumen von ca. 2 Litern wird bei einer entsprechend hohen Auslastung dem betrachteten Hauptbrennraum pro Arbeitsspiel ca. 100 mg Wasserstoff über den Injektor 90 in das Saugrohr 100 zugeführt. Im Diagramm ist diese Kraftstoffzuführung mit dem Bezugszeichen 300 gekennzeichnet. Wie zu erkennen, erfolgt hier die Wasserstoff-Zugabe in den Hauptbrennraum 70 von dem Saugrohr 100 kommend während des Ansaugtaktes. Bevorzugt geschieht diese Wasserstoff-Zugabe innerhalb eines mittleren Zeitabschnittes des Ansaugtaktes. Dies wirkt sich vorteilhaft aus für das Zustandekommen einer guten Wasserstoff-Luft-Gemischbildung im Hauptbrennraum 70. Die Tatsache, dass die Wasserstoffzufuhr in den Hauptbrennraum 70 in einer einzigen Portion geschieht, soll keine Einschränkung auf dieses Prinzip bedeuten.

Zur jeweiligen Ausübung ihrer Vorkammer-Funktion wird der aktiven Vorkammer 40 während der aktiven zweiten Betriebsart eine Wasserstoffmenge von etwa 1 bis 5 mg zugleitet, was im Diagramm durch das Bezugszeichen 310 gekennzeichnet ist. Wie zu erkennen, setzt dieser Vorgang hier erst gegen das nahende Ende des Ansaugtaktes ein. Auch wenn gemäß der Darstellung der Vorgang der Vorkammer-Einspritzung im Übergangsbereich zwischen Ansaug- und Kompressionstakt abgeschlossen ist, stellt dies keine darauf bezogene Einschränkung für das erfindungsgemäße Verfahren dar. Hinsichtlich seiner charakteristischen Grundform weist der Druckniveau-Fortzeitverlauf 330 innerhalb des Hauptbrennraums 70 während des Kompressionstakts keine Besonderheit auf.

Die schematische Visualisierung der ersten Betriebsart wäre prinzipiell ähnlich der Figur 4. Die Kraftstoffmenge 300 würde hier schematisch der in den Hauptbrennraum über die Vorkammer 40 eingespritzten Menge entsprechen. Die Menge 310 entspräche weiterhin einer in der Vorkammer verbleibenden Restmenge als Zündverstärker.

Anstelle einer Kombination aus der in Figur 1 gezeigten Saugrohreinspritzung und der entsprechend ausgelegten aktiven Vorkammer bestehen alternative erfindungsgemässe Konzepte
a) Ausstattung des Gasmotors mit einer Saugrohreinspritzung in Ergänzung einer Direkteinspritzung mittels eines ausserhalb einer Vorkammer angeordneten Injektors. Bevorzugt erhält auch eine solche Brennraum-Einheit zusätzlich eine Vorkammer und besonders bevorzugt eine aktive Vorkammer. Eine solches Konzept (a) ohne Vorkammer, (b) lediglich mit einer passiven Vorkammer und (c) mit einer aktiven Vorkammer besitzt zwar selbsterklärend eine eingeschränkte Funktionalität, die Konzepte [a] und [b] betreffend und/oder mit Bezug auf die Konzepte [b] und [c] einen höheren Systemaufwand, aber hat andererseits den Vorteil, dass ggf. ein besseres Zurückgreifen auf ein bereits im Markt verfügbares Bauteil-/Komponentenangebot möglich ist. Wie nunmehr nachvollziehbar, erfüllen jene Ausführungsformen gleichermassen den Grundgedanken der vorliegenden Erfindung.
b) Ausstattung eines Gasmotors mit einem Gasmischer und einer aktiven Vorkammer. Das erfindungsgemässe Ausführen eines solchen Gasmotors, der bezogen auf seinen Grundaufbau seine Gas-Einspeisung über einen Gasmischer erhält, kann in einer solchen Erweiterung hierfür einen gewissen zusätzlichen Anwendungsbereich verschaffen. Je nach Ausführungsgrad der aktiven Vorkammer, d.h. dem Gasanteil, der bezogen auf den Maximalbedarf, der einem solchen Gasmotor über die aktive Vorkammer zugeführt werden kann, lässt sich für einen solchen Gasmotor ein mehr oder weniger grosses Dynamikpotenzial erzielen. Das Zuführen von Brenngas mittels eines Gasmischers ist bekanntermassen besonders vorteilhaft für das Erreichen einer hohen Energieeffizienz und zur Erzielung geringer Schadstoffemissionen, aber ein alleiniges solches Zuführen von Brenngas ist für das Anwenden in dynamisch zu betreibenden Gasmotoren gänzlich ungeeignet.

In einer alternativ oder ergänzend erweiterten Ausführungsform kann eine aktive Vorkammer Verwendung finden, die über einen eigens ihr vorbehaltenen Pfad mit Luft versorgt werden kann. Dies bietet die folgenden Vorteile:
1. Indem innerhalb eines entsprechend koordinierten Nockenwellen-Winkelbereiches die Vorkammer 40 komplett mit Luft beschickt wird, kann erzielt werden, dass solche in der Vorkammer 40 zunächst verbliebene unverbrannte Kraftstoffanteile innerhalb eines kontrollierbaren Nockenwellen-Winkel-Korridors austreten, wodurch diese Rückstände abgastechnisch weitestgehend oder gar vollständig abgebaut werden können. Ohne diese Möglichkeit besteht der prinzipielle Nachteil darin, dass entsprechende Abgasrückstände erst nachdem die eigentliche Verbrennung im Hauptbrennraum 70 bereits abgeschlossen ist, aus der Vorkammer 40 in den Hauptbrennraum 70 austreten und diesen daher zumindest teilweise abgastechnisch unentsorgt verlassen könnten. Bei einem mit Erdgas, Biogas etc. betriebenen Gasmotoren, der dem Abgasreinheitsgrad heutiger Standards entspricht, stellt dieser sogenannte Methanschlupf bereits eine vergleichsweise hohe Umweltbelastung dar.
2. Für die Kraftstoff-Luftgemischbildung in der Vorkammer 40 besteht eine weitreichendere Einflussnahme, was einen weitreichenderen Optimierungsspielraum bietet, was wiederum für eine Begünstigung der Verbrennung nutzbringend ausgenutzt werden kann.

### Bezugszeichenliste:

| | |
|---|---|
| Kraftstofftank | 10 |
| Anschluss | 11 |
| Druckregler/Druckminderer | 20 |
| Kraftstoff-Zwischenspeicher | 30 |
| Vorkammer | 40 |
| Injektor, in die Vorkammer mündend | 60 |
| Brennraum | 70 |
| Zündkerze | 80 |
| Injektor, in den Ansaugtrakt mündend | 90 |
| Saugeinlasskanal | 100 |
| Luftauslasskanal | 110 |
| Volllastkennlinie | 200 |
| erster Flächenanteil | 210 |
| zweiter Flächenanteil | 220 |
| Korridor | 230 |
| dritter Flächenanteil | 240 |
| Drehmomentgrenzkennlinie | T |
| min. Drehmoment-Grenzkennlinie | T1 |
| max. Drehmoment-Grenzkennlinie | T2 |
| Eingespritzte Kraftstoffmenge in Ansaugtrakt | 300 |
| Eingespritzte Kraftstoffmenge in Vorkammer | 310 |
| Druck Hauptbrennraum | 330 |

## Patentansprüche

1. Verfahren zum Betrieb eines Gasmotors, der mindestens einen Brennraum (70) und wenigstens zwei Kraftstoff-Zuführungspfade zur Kraftstoffversorgung des wenigstens einen Brennraums (70) umfasst, wobei über die mindestens zwei unterschiedlichen Kraftstoff-Zuführungspfade selektiv eine Direkteinspritzung oder eine Einspritzung in den Ansaugtrakt für den wenigstens einen Brennraum (70) ausgeführt werden kann,
wobei unter jeweiligem Bezug auf die Haupteinspritzung in einer ersten Betriebsart der zur Beladung des wenigstens einen Brennraums (70) benötigte Kraftstoffanteil dem Brennraum (70) ausschliesslich per Direkteinspritzung zugeführt wird und in einer zweiten Betriebsart der zur Beladung des wenigstens einen Brennraums (70) benötigte Kraftstoffanteil ausschliesslich in Form eines Kraftstoff-Luftgemisches über den Lufteinlass des Brennraums (70) zugeführt wird, welches sich aufgrund der Zuführung von Kraftstoff in den Ansaugtrakt (100) des Brennraumes (70) bzw. mehrerer Brennräume (70) bildet, **dadurch gekennzeichnet, dass** der wenigstens eine Brennraum (70) eine zugeordnete Vorkammer (40) aufweist und die Direkteinspritzung in den Hauptbrennraum (70) über die Vorkammer (40) erfolgt.

2. Verfahren nach Anspruch 1, **dadurch gekennzeichnet, dass** über die unterschiedlichen Kraftstoff-Zuführungspfade ein Kraftstoff der gleichen chemischen Zusammensetzung zugeführt wird.

3. Verfahren nach einem der vorherigen Ansprüche, **dadurch gekennzeichnet, dass** die Betriebsart in Abhängigkeit des aktuellen Motorbetriebspunktes im Drehzahl-Drehmoment-Kennfeld des Gasmotors gewählt wird.

4. Verfahren nach Anspruch 3, **dadurch gekennzeichnet, dass** das Drehzahl-Drehmoment-Kennfeld des Gasmotors in wenigstens einem ersten und zweiten, jeweils zusammenhängenden Flächenanteil (210, 220) separiert ist und der Gasmotor in der ersten Betriebsart betrieben wird, wenn der Motorbetriebspunkt im ersten Flächenanteil (210) liegt und der Gasmotor in der zweiten Betriebsart betrieben wird, wenn der Betriebspunkt des Gasmotors im zweiten Flächenanteil (220) liegt.

5. Verfahren nach Anspruch 4, **dadurch gekennzeichnet, dass** der erste und zweite Flächenanteil (210, 220) durch eine Drehmoment-Grenzkennlinie (T) separiert sind, wobei die Drehmoment-Grenzkennlinie (T) vorzugsweise mit zunehmender Drehzahl ansteigt, insbesondere monoton, bevorzugt streng monoton ansteigt.

6. Verfahren nach einem der Ansprüche 4 oder 5, **dadurch gekennzeichnet, dass** die untere Grenze des ersten Flächenanteils (210) durch die Drehmoment-Grenzkennlinie (T) und die obere Grenze durch die Volllastkennlinie (200) des Gasmotors gebildet ist, wobei der erste Flächenanteil (210) weiterhin durch eine minimale Drehzahl, vorzugsweise die Leerlaufdrehzahl des Gasmotors, und eine obere Drehzahlgrenze begrenzt ist, und wobei die obere Drehzahlgrenze vorzugsweise im Bereich zwischen 40% und 75% der Maximaldrehzahl des Gasmotors liegt, idealerweise der Eckdrehzahl des Gasmotors entspricht.

7. Verfahren nach einem der Ansprüche 5 oder 6, **dadurch gekennzeichnet, dass** die Drehmoment-Grenzkennlinie (T) variabel definierbar ist, insbesondere abhängig von wenigstens einem Betriebszustandsparameter des Gasmotors und/oder wenigstens einem Betriebszustandsparameter einer durch den Gasmotor angetriebenen Einheit, insbesondere eine mobile Arbeitsmaschine, dynamisch eingestellt wird.

8. Verfahren nach Anspruch 7, **dadurch gekennzeichnet, dass** ein Korridor (230) durch eine minimale und maximale Drehzahl-Drehmoment-Grenzkennlinie (T2, T1) definiert wird und die Drehmoment-Grenzkennlinie (T) dynamisch innerhalb des Korridors (230) verschiebbar ist, insbesondere in Abhängigkeit des wenigstens einen Betriebszustandparameters.

9. Verfahren nach einem der vorstehenden Ansprüche, **dadurch gekennzeichnet, dass** der Übergang zwischen erster und zweiter Betriebsart diskret erfolgt.

10. Verfahren nach einem der vorstehenden Ansprüchen, **dadurch gekennzeichnet, dass** der Gasmotor in wenigstens einer dritten Betriebsart betrieben wird, wobei während der aktivierten dritten Betriebsart der zur Beladung des wenigstens einen Brennraums (70) benötigte Kraftstoffanteil gemäß einem definierbaren Verhältnis per Direkteinspritzung und per Einspritzung in den Ansaugtrakt des Brennraumes (70) zugeführt wird.

11. Verfahren nach Anspruch 9, **dadurch gekennzeichnet, dass** die dritte Betriebsart ausgeführt wird, wenn der Arbeitspunkt des Gasmotors in einem Übergangsbereich (240) liegt, der durch einen dritten Flächenanteil (240) zwischen dem ersten und zweiten Flächenanteil (210, 220) im Drehzahl-Drehmoment-Kennfeld definiert ist.

12. Verfahren nach Anspruch 10, **dadurch gekennzeichnet, dass** der dritte Flächenanteil (230) und/oder die Lage der Drehmoment-Grenzkennlinien (T3, T4) zwischen dem dritten Flächenanteil (230) und des ersten und/oder zweiten Flächenanteils (210, 220) dynamisch definiert sind, insbesondere in Abhängigkeit wenigstens eines Betriebszustandsparameters des Gasmotors und/oder wenigstens eines Betriebszustandsparameters der durch den Gasmotor angetriebenen Einheit, insbesondere eine mobile Arbeitsmaschine.

13. Verfahren nach einem der vorstehenden Ansprüche, **dadurch gekennzeichnet, dass** die aktive Betriebsart in Abhängigkeit des aktuellen Arbeitspunktes des Gasmotors im Drehzahl-Drehmoment-Kennfeld und abhängig von einer Soll-Beschleunigungs-Anforderung und/oder einer Vorgabe zur Abgas-Emission und/oder Vorgabe zum Kraftstoffverbrauch ausgewählt wird.

14. Verfahren nach einem der Ansprüche 1 bis 13, **dadurch gekennzeichnet, dass** der über den Ansaugtrakt dem Brennraum (70) zugeführte Kraftstoff in einen solchen Teilabschnitt des Luftansaugtrakts zugeführt wird, der bereits dediziert zur Luftversorgung nur des Brennraums (70) dient.

15. Verfahren nach einem der Ansprüche 1 bis 13, **dadurch gekennzeichnet, dass** der über den Ansaugtrakt dem Brennraum (70) zugeführte Kraftstoff in einen solchen Abschnitt des Luftansaugtrakts des Gasmotors eingeleitet wird, der Bestandteil des Luftversorgungspfads des Brennraums (70) sowie wenigstens eines weiteren Brennraums (70) ist und vorzugsweise Bestandteil des Luftversorgungspfads sämtlicher Brennräume (70) ist, die funktional über einen gemeinsamen Luftverteiler (13) verfügen.

16. Verfahren nach Anspruch 15, **dadurch gekennzeichnet, dass** das Brenngas in denjenigen Abschnitt des Luftansaugtrakts des Gasmotors zugeführt wird, der dem Luftverteiler (13) entspricht.

17. Verfahren nach einem der vorhergehenden Ansprüche, **dadurch gekennzeichnet, dass** die Vorkammer (40) einen dedizierten Kraftstoffanschluss aufweist, um den Kraftstoff der Vorkammer (40) unmittelbar ohne Umweg über den zugeordneten Brennraum (70) zuzuführen.

18. Verfahren nach Anspruch 17, **dadurch gekennzeichnet, dass** die Beladung des Hauptbrennraums (70) zumindest bis zu einem gewissen Kraftstoffbedarf in Bezug auf eine Haupteinspritzung in den betreffenden Brennraum (70) allein über die Vorkammer (40) erfolgen kann.

19. Verfahren nach einem der vorstehenden Ansprüche 17 und 18, **dadurch gekennzeichnet, dass** die Vorkammer (40) über einen eigenen Luftanschluss verfügt, wodurch ihr unabhängig von der bestehenden Fluidverbindung zum Hauptbrennraum (70) Luft zugeführt wird.

20. Verfahren nach einem der vorstehenden Ansprüche, **dadurch gekennzeichnet, dass** der Brennraum-Innendruck während des Ansaugtaktes einen Wert oberhalb von 2,5 bar beträgt, bevorzugt einen Wert zwischen 4 bar bis 6 bar beträgt und besonders bevorzugt einen Wert zwischen 4,5 bar und 5,5 bar beträgt.

21. Verfahren nach einem der vorstehenden Ansprüche, **dadurch gekennzeichnet, dass** es sich bei dem Kraftstoff um molekularen Wasserstoff oder ein überwiegend molekularen Wasserstoff enthaltendes Kraftstoffgemisch handelt.

22. Gasmotor mit ein oder mehreren Brennräumen und einer Kraftstoffeinspritzvorrichtung sowie wenigstens zwei separate Kraftstoff-Zuführungspfade umfassend, wobei ein Kraftstoff-Zuführungspfad in einer ersten Betriebsart eine ausschliessliche Direkteinspritzung von Kraftstoff in wenigstens einen Brennraum (70) über eine dem Brennraum zugeordnete Vorkammer (40) ermöglicht und ein weiterer Kraftstoff-Zuführungspfad in einer zweiten Betriebsart eine ausschliessliche Zuführung von Kraftstoff in den Luftansaugtrakt des wenigstens einen Brennraums (70) ermöglicht, **dadurch gekennzeichnet, dass** der Gasmotor wenigstens eine Motorsteuerung aufweist, die zur Durchführung des Verfahrens nach einem der vorstehenden Ansprüche konfiguriert ist.

23. Gasmotor nach Anspruch 22, **dadurch gekennzeichnet, dass** es sich bei dem Kraftstoff um molekularen Wasserstoff oder ein überwiegend molekularen Wasserstoff enthaltendes Kraftstoffgemisch handelt.

24. Maschine, vorzugsweise mobile Maschine, insbesondere mobile Arbeitsmaschine, mit wenigstens einem Gasmotor nach einem der vorstehenden Ansprüche 22 oder 23.

## Claims

1. Method for operating a gas engine which comprises at least one combustion chamber (70) and at least two fuel supply paths for supplying fuel to the at least one combustion chamber (70), wherein selectively, via the at least two different fuel supply paths, a direct injection or an injection into the intake tract for the at least one combustion chamber (70) can be carried out, wherein, with respective reference to the main injection, in a first operating mode, the fuel fraction required for charging the at least one combustion chamber (70) is supplied to the combustion chamber (70) exclusively by direct injection, and in a second operating mode, the fuel fraction required for charging the at least one combustion chamber (70) is supplied exclusively in the form of a fuel-air mixture via the air inlet of the combustion chamber (70), which forms due to the supply of fuel into the intake tract (100) of the combustion chamber (70) or of multiple combustion chambers (70), **characterized in that** the at least one combustion chamber (70) has an assigned prechamber (40) and the direct injection into the main combustion chamber (70) takes place via the prechamber (40).

2. Method according to claim 1, **characterized in that** a fuel of the same chemical composition is supplied via the different fuel supply paths.

3. Method according to one of the preceding claims, **characterized in that** the operating mode is selected depending on the current engine operating point in the speed-torque map of the gas engine.

4. Method according to claim 3, **characterized in that** the speed-torque map of the gas engine is separated into at least one first and second, respectively contiguous, area part (210, 220) and the gas engine is operated in the first operating mode when the engine operating point lies in the first area part (210) and the gas engine is operated in the second operating mode when the operating point of the gas engine lies in the second area part (220).

5. Method according to claim 4, **characterized in that** the first and second area part (210, 220) are separated by a torque limit characteristic line (T), wherein the torque limit characteristic line (T) preferably rises with increasing speed, in particular monotonically, preferably strictly monotonically.

6. Method according to one of claims 4 or 5, **characterized in that** the lower boundary of the first area part (210) is formed by the torque limit characteristic line (T) and the upper boundary is formed by the full-load characteristic curve (200) of the gas engine, wherein the first area part (210) is furthermore limited by a minimum speed, preferably the idle speed of the gas engine, and an upper speed limit, and wherein the upper speed limit preferably lies in the range between 40% and 75% of the maximum speed of the gas engine, ideally corresponds to the corner speed of the gas engine.

7. Method according to one of claims 5 or 6, **characterized in that** the torque limit characteristic line (T) can be defined variably, in particular is dynamically adjusted depending on at least one operating state parameter of the gas engine and/or at least one operating state parameter of a unit driven by the gas engine, in particular a mobile working machine.

8. Method according to claim 7, **characterized in that** a corridor (230) is defined by a minimum and maximum speed-torque limit characteristic line (T2, T1) and the torque limit characteristic line (T) is dynamically shiftable within the corridor (230), in particular depending on the at least one operating state parameter.

9. Method according to one of the preceding claims, **characterized in that** the transition between first and second operating mode takes place discretely.

10. Method according to one of the preceding claims, **characterized in that** the gas engine is operated in at least one third operating mode, wherein, during the activated third operating mode, the fuel fraction required for charging the at least one combustion chamber (70) is supplied according to a definable ratio by direct injection and by injection into the intake tract of the combustion chamber (70).

11. Method according to claim 9, **characterized in that** the third operating mode is carried out when the operating point of the gas engine lies in a transition region (240) which is defined by a third area part (240) between the first and second area part (210, 220) in the speed-torque map.

12. Method according to claim 10, **characterized in that** the third area part (230) and/or the position of the torque limit characteristic lines (T3, T4) between the third area part (230) and the first and/or second area part (210, 220) are dynamically defined, in particular depending on at least one operating state parameter of the gas engine and/or at least one operating state parameter of the unit driven by the gas engine, in particular a mobile working machine.

13. Method according to one of the preceding claims, **characterized in that** the active operating mode is selected depending on the current operating point of the gas engine in the speed-torque map and depending on a desired acceleration requirement and/or a specification relating to exhaust-gas emission and/or a specification relating to fuel consumption.

14. Method according to one of claims 1 to 13, **characterized in that** the fuel supplied to the combustion chamber (70) via the intake tract is supplied into such a subsection of the air intake tract which already serves dedicatedly to supply air only to the combustion chamber (70).

15. Method according to one of claims 1 to 13, **characterized in that** the fuel supplied to the combustion chamber (70) via the intake tract is introduced into such a section of the air intake tract of the gas engine which is a component of the air supply path of the combustion chamber (70) as well as at least one further combustion chamber (70) and preferably is a component of the air supply path of all combustion chambers (70) which functionally have a common air distributor (13).

16. Method according to claim 15, **characterized in that** the fuel gas is supplied into that section of the air intake tract of the gas engine which corresponds to the air distributor (13).

17. Method according to one of the preceding claims, **characterized in that** the prechamber (40) has a dedicated fuel connection in order to supply the fuel of the prechamber (40) directly without detour via the assigned combustion chamber (70).

18. Method according to claim 17, **characterized in that** the charging of the main combustion chamber (70) can take place, at least up to a certain fuel demand with respect to a main injection into the relevant combustion chamber (70), alone via the prechamber (40).

19. Method according to one of the preceding claims 17 and 18, **characterized in that** the prechamber (40) has its own air connection, as a result of which air is supplied to it independently of the existing fluid connection to the main combustion chamber (70).

20. Method according to one of the preceding claims, **characterized in that** the in-cylinder pressure during the intake stroke is above 2.5 bar, preferably is between 4 bar and 6 bar and particularly preferably is between 4.5 bar and 5.5 bar.

21. Method according to one of the preceding claims, **characterized in that** the fuel is molecular hydrogen or a fuel mixture containing predominantly molecular hydrogen.

22. Gas engine with one or more combustion chambers and a fuel injection device as well as at least two separate fuel supply paths, wherein one fuel supply path in a first operating mode enables an exclusive direct injection of fuel into at least one combustion chamber (70) via a prechamber (40) assigned to the combustion chamber and a further fuel supply path in a second operating mode enables an exclusive supply of fuel into the air intake tract of the at least one combustion chamber (70), **characterized in that** the gas engine has at least one engine control unit which is configured for carrying out the method according to one of the preceding claims.

23. Gas engine according to claim 22, **characterized in that** the fuel is molecular hydrogen or a fuel mixture containing predominantly molecular hydrogen.

24. Machine, preferably mobile machine, in particular mobile working machine, with at least one gas engine according to one of the preceding claims 22 or 23.

## Revendications

1. Procédé de fonctionnement d'un moteur à gaz comprenant au moins une chambre de combustion (70) et au moins deux voies d'alimentation en carburant destinées à l'alimentation en carburant de la ou des chambres de combustion (70), une injection directe ou une injection dans le conduit d'admission pouvant être réalisée de manière sélective pour la ou lesdites chambres de combustion (70) par l'intermédiaire des au moins deux voies d'alimentation en carburant différentes,
dans lequel, en référence dans chaque cas à l'injection principale, dans un premier mode de fonctionnement, la part de carburant nécessaire au chargement de la ou des chambres de combustion (70) est amenée à la chambre de combustion (70) exclusivement par injection directe et, dans un second mode de fonctionnement, la part de carburant nécessaire au chargement de la ou des chambres de combustion (70) est amenée exclusivement sous la forme d'un mélange carburant-air par l'entrée d'air de la chambre de combustion (70), lequel se forme du fait de l'amenée de carburant dans le conduit d'admission (100) de la chambre de combustion (70) ou de plusieurs chambres de combustion (70),
**caractérisé en ce que** la ou lesdites chambres de combustion (70) comportent une préchambre (40) associée et **en ce que** l'injection directe dans la chambre de combustion principale (70) s'effectue via la préchambre (40).

2. Procédé selon la revendication 1, **caractérisé en ce qu'**un carburant de même composition chimique est amené par les différentes voies d'alimentation en carburant.

3. Procédé selon l'une quelconque des revendications précédentes, **caractérisé en ce que** le mode de fonctionnement est choisi en fonction du point de fonctionnement moteur actuel dans la cartographie régime-couple du moteur à gaz.

4. Procédé selon la revendication 3, **caractérisé en ce que** la cartographie régime-couple du moteur à gaz est séparée en au moins une première et une deuxième zones de surface, chacune continue (210, 220), et **en ce que** le moteur à gaz est exploité dans le premier mode de fonctionnement lorsque le point de fonctionnement moteur se trouve dans la première zone de surface (210), et **en ce que** le moteur à gaz est exploité dans le second mode de fonctionnement lorsque le point de fonctionnement du moteur à gaz se trouve dans la deuxième zone de surface (220).

5. Procédé selon la revendication 4, **caractérisé en ce que** la première et la deuxième zones de surface (210, 220) sont séparées par une courbe caractéristique limite de couple (T), la courbe caractéristique limite de couple (T) augmentant de préférence avec l'augmentation du régime, notamment augmentant de manière monotone, de préférence augmentant de manière strictement monotone.

6. Procédé selon l'une quelconque des revendications 4 ou 5, **caractérisé en ce que** la limite inférieure de la première zone de surface (210) est formée par la courbe caractéristique limite de couple (T) et la limite supérieure par la courbe caractéristique de pleine charge (200) du moteur à gaz, la première zone de surface (210) étant en outre limitée par un régime minimal, de préférence le régime de ralenti du moteur à gaz, et par une limite supérieure de régime, et la limite supérieure de régime se situant de préférence dans la plage comprise entre 40 % et 75 % du régime maximal du moteur à gaz, correspondant idéalement au régime de coude du moteur à gaz.

7. Procédé selon l'une quelconque des revendications 5 ou 6, **caractérisé en ce que** la courbe caractéristique limite de couple (T) est définissable de manière variable, notamment réglée dynamiquement en fonction d'au moins un paramètre d'état de fonctionnement du moteur à gaz et/ou d'au moins un paramètre d'état de fonctionnement d'une unité entraînée par le moteur à gaz, notamment une machine de travail mobile.

8. Procédé selon la revendication 7, **caractérisé en ce qu'**un corridor (230) est défini par une courbe caractéristique limite de couple régime-couple minimale et maximale (T2, T1) et **en ce que** la courbe caractéristique limite de couple (T) peut être déplacée dynamiquement à l'intérieur du corridor (230), notamment en fonction dudit au moins un paramètre d'état de fonctionnement.

9. Procédé selon l'une quelconque des revendications précédentes, **caractérisé en ce que** la transition entre le premier et le second mode de fonctionnement s'effectue de manière discrète.

10. Procédé selon l'une quelconque des revendications précédentes, **caractérisé en ce que** le moteur à gaz est exploité dans au moins un troisième mode de fonctionnement, la part de carburant nécessaire au chargement de la ou des chambres de combustion (70) étant, pendant le troisième mode de fonctionnement activé, amenée selon un rapport définissable par injection directe et par injection dans le conduit d'admission de la chambre de combustion (70).

11. Procédé selon la revendication 9, **caractérisé en ce que** le troisième mode de fonctionnement est exécuté lorsque le point de fonctionnement du moteur à gaz se trouve dans une zone de transition (240), définie par une troisième zone de surface (240) entre la première et la deuxième zones de surface (210, 220) dans la cartographie régime-couple.

12. Procédé selon la revendication 10, **caractérisé en ce que** la troisième zone de surface (230) et/ou la position des courbes caractéristiques limites de couple (T3, T4) entre la troisième zone de surface (230) et la première et/ou la deuxième zones de surface (210, 220) sont définies dynamiquement, notamment en fonction d'au moins un paramètre d'état de fonctionnement du moteur à gaz et/ou d'au moins un paramètre d'état de fonctionnement de l'unité entraînée par le moteur à gaz, notamment une machine de travail mobile.

13. Procédé selon l'une quelconque des revendications précédentes, **caractérisé en ce que** le mode de fonctionnement actif est sélectionné en fonction du point de fonctionnement actuel du moteur à gaz dans la cartographie régime-couple et en fonction d'une exigence d'accélération de consigne et/ou d'une consigne relative aux émissions d'échappement et/ou d'une consigne relative à la consommation de carburant.

14. Procédé selon l'une quelconque des revendications 1 à 13, **caractérisé en ce que** le carburant amené à la chambre de combustion (70) par le conduit d'admission est introduit dans une section partielle du conduit d'admission d'air déjà dédiée à l'alimentation en air de la seule chambre de combustion (70).

15. Procédé selon l'une quelconque des revendications 1 à 13, **caractérisé en ce que** le carburant amené à la chambre de combustion (70) par le conduit d'admission est introduit dans une section du conduit d'admission d'air du moteur à gaz qui fait partie du trajet d'alimentation en air de la chambre de combustion (70) ainsi que d'au moins une autre chambre de combustion (70), et fait de préférence partie du trajet d'alimentation en air de l'ensemble des chambres de combustion (70) qui disposent fonctionnellement d'un répartiteur d'air commun (13).

16. Procédé selon la revendication 15, **caractérisé en ce que** le gaz combustible est amené dans la section du conduit d'admission d'air du moteur à gaz correspondant au répartiteur d'air (13).

17. Procédé selon l'une quelconque des revendications précédentes, **caractérisé en ce que** la préchambre (40) comporte un raccord de carburant dédié, afin d'amener le carburant à la préchambre (40) directement, sans détour par la chambre de combustion associée (70).

18. Procédé selon la revendication 17, **caractérisé en ce que** le chargement de la chambre de combustion principale (70) peut être effectué, au moins jusqu'à un certain besoin en carburant, en ce qui concerne une injection principale dans la chambre de combustion concernée (70), uniquement via la préchambre (40).

19. Procédé selon l'une quelconque des revendications 17 et 18 ci-dessus, **caractérisé en ce que** la préchambre (40) dispose d'un raccord d'air propre, par lequel de l'air lui est amené indépendamment de la liaison fluidique existante avec la chambre de combustion principale (70).

20. Procédé selon l'une quelconque des revendications précédentes, **caractérisé en ce que** la pression intérieure de la chambre de combustion pendant le temps d'admission présente une valeur supérieure à 2,5 bar, présente de préférence une valeur comprise entre 4 bar et 6 bar et, de manière particulièrement préférée, une valeur comprise entre 4,5 bar et 5,5 bar.

21. Procédé selon l'une quelconque des revendications précédentes, **caractérisé en ce que** le carburant est de l'hydrogène moléculaire ou un mélange de carburants contenant majoritairement de l'hydrogène moléculaire.

22. Moteur à gaz comprenant une ou plusieurs chambres de combustion, un dispositif d'injection de carburant ainsi qu'au moins deux voies d'alimentation en carburant séparées, une voie d'alimentation en carburant permettant, dans un premier mode de fonctionnement, une injection directe exclusive de carburant dans au moins une chambre de combustion (70) via une préchambre (40) associée à la chambre de combustion, et une autre voie d'alimentation en carburant permettant, dans un second mode de fonctionnement, une amenée exclusive de carburant dans le conduit d'admission d'air de la ou des chambres de combustion (70),
**caractérisé en ce que** le moteur à gaz comporte au moins une commande moteur configurée pour mettre en oeuvre le procédé selon l'une quelconque des revendications précédentes.

23. Moteur à gaz selon la revendication 22, **caractérisé en ce que** le carburant est de l'hydrogène moléculaire ou un mélange de carburants contenant majoritairement de l'hydrogène moléculaire.

24. Machine, de préférence machine mobile, notamment machine de travail mobile, comportant au moins un moteur à gaz selon l'une quelconque des revendications 22 ou 23.
